# EUROPÄISCHE PATENTANMELDUNG

(11) **EP 4 273 199 A1**
(43) Veröffentlichungstag der Anmeldung: **08.11.2023**
(21) Anmeldenummer: 23171801.6
(22) Anmeldetag: 05.05.2023
(51) Int. Cl.: C09D 5/34, C09D 7/40, C08K 7/02, B05D 7/08, B05D 3/06, B27K 3/52

(54) **FASERVERSTÄRKTE SPACHTELMASSE**

(30) Priorität: 06.05.2022 EP 22172065
(71) Anmelder: Kneho-Lacke, 32805 Horn-Bad Meinberg (DE)
(72) Erfinder: Dinkelborg, Bernd, 32805 Horn-Bad Meinberg (DE); Wesemann, Fred, 32805 Horn-Bad Meinberg (DE)
(74) Vertreter: dompatent von Kreisler Selting Werner - Partnerschaft von Patent- und Rechtsanwälten mbB

(57) **Zusammenfassung**

Die vorliegende Erfindung betrifft eine faserverstärkte 1K-UV-Spachtelmasse zum Verfüllen von Fehlstellen in Holzbrettern, umfassend ein Bindemittel, Fasern und einen Photoinitiator, und ein Verfahren zum Verfüllen von Fehlstellen in Holzbrettern unter Verwendung der Spachtelmasse.

## Beschreibung

Die vorliegende Erfindung betrifft eine faserverstärkte 1K-UV-Spachtelmasse zum Verfüllen von Fehlstellen in Holzbrettern, umfassend ein Bindemittel, Fasern und einen Photoinitiator, und ein Verfahren zum Verfüllen von Fehlstellen in Holzbrettern unter Verwendung der Spachtelmasse.

Holz ist ein beliebter Baustoff, der unter anderem in Form von Brettern oder Paneelen als Fußboden- oder Wandverkleidung Verwendung findet. Die Holzbretter werden in der Regel durch Sägen von Rundholz parallel zur Stammachse hergestellt. Die erhaltenen Bretter werden nach festgelegten Kriterien sortiert, wobei als Sortierkriterien beispielsweise die Lage und Größe von Ästen und die Art, Lage und Tiefe von Rissen herangezogen werden.

Neben den optischen Einschränkungen stellen Risse im Holz immer eine Möglichkeit für den Eintritt von Nässe und Mikroorganismen dar, die das Holz weiter schädigen können. Dies ist besonders im Bereich von Astlöchern relevant, da hier Wasser besonders tief eindringen kann.

Bei der Großserienfertigung von Paneelen aus Holz und Holzbrettern, die durch Zusammenführung einer Vielzahl einzelner Holzstreifen aufgebaut werden, werden Astlöcher im Allgemeinen wie folgt behandelt:
In einem ersten Schritt wird eine farbige Spachtelmasse zum Verfüllen des Astlochs und etwaiger größerer Risse aufgetragen. In einem zweiten Prozessschritt erfolgt ein Kalibrieren der Parkettelemente, gefolgt von einem maschinellen, vielflächigen Auftrag einer transparenten, UV-härtenden Spachtelmasse, um feinere Risse, Löcher und Beschädigungen zu füllen. In einem abschließenden Produktionsschritt wird die behandelte Oberfläche des Paneels mit einem Lacksystem, einem Hartwachsöl oder einem Hydrolack beschichtet.

Im Rahmen des ersten Schritts erfolgt der Auftrag der Spachtelmasse in der Regel von Hand, wobei die Spachtelmasse meist ein Bindemittel umfasst, das in der Lage ist durch physikalische Trocknung auszuhärten, beispielsweise durch Verdampfen eines organischen Lösungsmittels. Alternativ können Bindemittel verwendet werden, die durch chemische Reaktion, beispielsweise Polymerisation, aushärten.

In beiden Fällen müssen die behandelten Paneele ruhen bevor sie weiterverarbeitet werden können. Dabei stellt sich die Schwierigkeit, dass die Paneele nicht platzsparend aufeinandergestapelt werden können, da hierzu der Härtungs- und/oder Trocknungsprozess abgeschlossen sein muss. Somit können die Paneele in der Regel erst nach einer Totzeit von 6 bis 12 Stunden weiterverarbeitet werden.

Für die Ausbesserung und Korrektur von Fehlstellen in Holz und Holzbrettern stehen dem Fachmann eine Reihe von Produkten zur Verfügung. Den Produkten ist gemein, dass sie oberflächlich auf die Fehlstellen aufgebracht und ausgehärtet und/oder getrocknet werden. Die Spachtelmassen sich je nach Zusammensetzung in unterschiedliche Kategorien einteilen lassen.

Ein gängiges Material, das zur Verfüllung von Astlöchern verwendet wird, ist Polyamid. Polyamid ist ein thermoplastisches Granulat, welches durch Erhitzen verflüssigt und in die Astlöcher und Fehlstellen eingebracht wird. Nach dem Abkühlen mit Hilfe eines Abkühlblocks kann das Material beiarbeitet werden. Das Material kann vollautomatisch verarbeitet werden, jedoch ist die Benetzung mit Beize, Lack und Öl unzureichend, so dass keine ausreichende Zwischenhaftung gegeben ist. Darüber hinaus ist die Klebkraft zu den meisten Substraten insbesondere bei größeren Fehlstellen unzureichend.

1K-Spachtelmassen härten durch das Verflüchtigen des Lösungsmittels aus, was zu dem oben beschriebenen Nachteil eines langsamen Trocknungsprozesses und damit einer verzögerten Weiterverarbeitung führt. Darüber hinaus weisen die Produkte in der Regel einen erhöhten Schrumpf und nur eine ungenügende Haftung zum Untergrund auf, so dass diese Produkte in der industriellen Massenfertigung von Parkett oder Möbelteilen nicht oder nur sehr begrenzt zum Einsatz kommen.

Herkömmliche 2K-Spachtelmassen bestehen in der Regel aus einer pastösen und einer flüssigen Komponente, die vor Gebrauch in einem bestimmten Mischungsverhältnis angemischt werden müssen. Das Zusammenmischen im richtigen Verhältnis birgt eine Reihe von Risiken und Schwierigkeiten, die vom Umgang mit potentiellen Gefahrenstoffen, wie Kobalt, Peroxid und Styrol, bis hin zum Erzeugen einer homogenen Mischung reichen. Darüber hinaus weisen 2K Spachtelmassen in der Regel nur eine kurze Topfzeit auf, wodurch sie schnell unbrauchbar werden. Als weiterer Nachteil von 2K-Spachtelmassen ist zu nennen, dass eine maschinelle Verarbeitung technisch in der Regel nicht möglich.

Ein Ansatz, die Totzeit im Fertigungsprozess zu verkürzen, besteht in der Verwendung von UV-härtenden Spachtelmassen. Durch Bestrahlung mit UV-Strahlung kann eine dünne "Haut" auf der Fehlstelle erzeugt werden, so dass die mit der Spachtelmasse behandelten Teile händisch oder maschinell aufeinander abgestapelt und die Bauteile so bis zur Endaushärtung gelagert werden können. Allerdings weisen 2K-UV-Spachtelmassen neben den üblichen Nachteilen von 2K-Spachtelmassen den weiteren Nachteil auf, dass die Tiefenhärtung durch chemische Reaktion erfolgt, so dass Vorkehrungen für mögliche Wärmeentwicklungen oder Ähnliches getroffen werden müssen.

UV-Spachtelmassen als 1-Komponentensysteme können zwar gebrauchsfertig zur Verfügung gestellt werden, weisen aber in der Regel optische Nachteile wie eine Trübung auf. Solche 1K-UV-Spachtelmassen werden insbesondere im Automobilsektor eingesetzt und sind für metallische Untergründe optimiert. Eine Anwendung auf nicht-metallischen Materialien, wie beispielsweise Holz, ist daher meist nicht möglich. Darüber hinaus ist die Aushärttiefe in der Regel auf wenige Millimeter begrenzt.

DE 9312302.7 beschreibt eine Masse zum Verschließen und/oder Glätten eines Basismaterials, das an seiner Oberfläche Unregelmäßigkeiten wie Löcher, Risse und Unebenheiten aufweist, wobei die Masse unter der Einwirkung eines äußeren physikalischen Mittels, wie beispielsweise einer UV-Strahlung härten kann. Die Masse weist ein Bindemittel, ein im Bindemittel dispergiertes Füllmaterial, das zumindest einen Bestandteil, ausgewählt aus einem inerten festen Material, einer Farbe und einem Pigment enthält, sowie einen Photopolymerisationsstarter auf, wobei das Bindemittel photochemisch polymerisierbar und insbesondere photochemisch vernetzbar ist und es bei relativ geringer Schichtdicke quasi augenblicklich polymerisieren kann. Die beschriebene Masse weist allerdings den Nachteil auf, dass sie transparent ist und so für Holzmaterialien weniger geeignet.

DE 35 21 382 betrifft ein Reparaturset für beschädigte Kunststoff-Formteile, bestehend aus A. einem verformbaren Laminat, welches ein ungesättigtes Polyesterharz, Monomeren, einen Lichtinitiator und ein textiles Fasergebinde enthält und beidseitig mit Deckfolie belegt ist, B. einer Faserspachtelmasse, welche ein ungesättigtes Polyesterharz, Monomere, einem Lichtinitiator und Kurzglasfasern enthält, sowie gegebenenfalls C. einer Füllstoffspachtelmasse, welche ein ungesättigtes Polyesterharz, Monomere, einem Lichtinitiator und transparente Füllstoffe enthält, wobei die Komponenten A, B und gegebenenfalls C - jeweils voneinander getrennt - flächig in einen licht- und monomerundurchlässigen Folienbeutel eingesiegelt sind.

DE 10 2007 016 595 offenbart eine umweltfreundliche Spachtelmasse, die ein Bindemittel, Wasser sowie mindestens einen Füllstoff enthält, wobei das Bindemittel mindestens ein wasserverdünnbares und/oder wasseremulgierbares Alkydharz ist.

Angesichts der derzeitigen Lage besteht weiterhin Bedarf nach einer Möglichkeit, Fehlstellen in Holzbrettern auszubessern, die eine schnelle Weiterverarbeitung der Bretter bei gleichzeitig einfacher Anwendung erlaubt.

Es wurde überraschend gefunden, dass diese Aufgabe durch eine gebrauchsfertige, UV-härtbare 1K-Spachtelmasse zum Verfüllen von Fehlstellen wie Astlöchern und Rissen gelöst wird.

Ein erster Gegenstand der vorliegenden Erfindung ist daher eine 1K-UV-Spachtelmasse zum Verfüllen von Fehlstellen in Holzbrettern umfassend, jeweils bezogen auf das Gesamtgewicht der Spachtelmasse:
a) 20 bis 50 Gew.-% eines UV-härtbaren Bindemittels;
b) 5 bis 30 Gew.-% Fasern, und
c) 0,1 bis 5 Gew.-% eines Photoinitiators.

Es wurde überraschend gefunden, dass durch die erfindungsgemäße Spachtelmasse die Vorteile der einfachen Handhabung einer 1K-Spachtelmasse mit der schnellen Aushärtung einer UV-härtenden Spachtelmasse kombiniert werden können, so dass eine unmittelbare Stapelbarkeit der Paneele erreicht wird. Darüber hinaus zeigt die erfindungsgemäße 1K-UV-Spachtelmasse außergewöhnlich gute Hafteigenschaften zum Untergrund und erlaubt eine gute Benetzbarkeit und Haftung von nachfolgenden Beschichtungen. Die erfindungsgemäße Spachtelmasse liegt als Ein-Komponenten-Spachtelmasse vor, was den Vorteil hat, dass die Spachtelmasse nicht angemischt werden muss und direkt auf die Fehlstelle im Holz aufgetragen werden kann. Durch die Kombination des UV-härtenden Bindemittels mit dem Photoinitiator kann durch Bestrahlung mit UV-Strahlung eine initiale "Haut" erzeugt werden, so dass ein händisches oder maschinelles Abstapeln der behandelten Paneele möglich ist. Überraschenderweise erlaubt die erfindungsgemäße Spachtelmasse eine Tiefenhärtung der Spachtelmasse durch physikalische Trocknung, ohne dass diese durch die Ausbildung der initialen Haut beeinträchtigt wäre.

Die erfindungsgemäße Spachtelmasse zeichnet sich durch eine gute Umweltverträglichkeit aus und ist vorzugsweise frei von organischen Lösungsmitteln. Weiterhin ist die erfindungsgemäße Spachtelmasse gesundheitlich unbedenklich, als dass sie im Gegensatz zu herkömmlichen 2K-Spachtelmassen frei von Styrol und anderen gesundheitlich bedenklichen Verbindungen ist, so dass keine Gefahrstoffklassifizierung, beispielsweise durch entsprechende Warnhinweise erforderlich ist. In einer Ausführungsform ist die erfindungsgemäße Spachtelmasse vorzugsweise wasserverdünnbar, so dass die Viskosität je nach Bedarf angepasst werden kann. In einer bevorzugten Ausführungsform liegt die Spachtelmasse in Form einer wässrigen Dispersion vor.

Die Spachtelmasse gemäß der vorliegenden Erfindung umfasst 20 bis 50 Gew.-%, vorzugsweise 30 bis 40 Gew.-%, jeweils bezogen auf das Gesamtgewicht der Spachtelmasse, eines UV-härtbaren Bindemittels. In einer bevorzugten Ausführungsform handelt es sich bei dem Bindemittel um ein Bindemittelgemisch mit einem UV-härtbaren Bestandteil und einem physikalisch trocknenden Bestandteil. Vorzugsweise ist das Bindemittel ausgewählt aus der Gruppe der (Meth)Acrylate und Polyurethane. Es können auch Copolymere, beispielsweise auf Basis von Styrol und (Meth)Acrylat, eingesetzt werden. Besonders bevorzugt wird als Bindemittel eine Mischung aus einem (Meth)Acrylat und einem Polyurethan-Bindemittel verwendet. In einer besonders bevorzugten Ausführungsform handelt es sich bei dem Bindemittel um ein Gemisch einer Styrol-Acrylat-Dispersion und einer Urethan-Acrylat-Dispersion. Auf diese Weise kann erreicht werden, dass sich auf der mit der Spachtelmasse behandelten Stelle eine erste ausgehärtete Schicht bildet, die eine weitere Verarbeitung des Holzes erlaubt, während die darunter liegende Spachtelmasse über einen längeren Zeitraum trocknen kann. So kann der Schrumpf und das Einfallen der Spachtelmasse reduziert und eine gute Abdeckung der Fehlstelle erreicht werden.

Die erfindungsgemäße Spachtelmasse umfasst weiterhin 5 bis 30 Gew.-%, vorzugsweise 10 bis 20 Gew.-%, jeweils bezogen auf das Gesamtgewicht der Spachtelmasse, Fasern. Vorzugsweise sind diese Fasern ausgewählt aus der Gruppe der Kohlenstofffasern, Silikatfasern, Polymerfasern, Cellulosefasern, Keramikfasern und Aramidfasern. In einer besonders bevorzugten Ausführungsform der vorliegenden Erfindung werden Silikatfasern verwendet. Es wurde überraschend gefunden, dass so eine hohe Zähelastizität bei gleichzeitig hoher innerer Festigkeit der Spachtelmasse erreicht werden kann.

Die erfindungsgemäße Spachtelmasse enthält weiterhin 0,1 bis 5 Gew.-%, vorzugsweise 0,5 bis 3 Gew.-%, jeweils bezogen auf das Gesamtgewicht der Spachtelmasse, an Photoinitiator. Es können sowohl radikalische als auch kationische Photoinitiatoren eingesetzt werden, wobei radikalische bevorzugt sind. Durch die Zugabe des Photoinitiators kann eine schnelle Weiterverarbeitung erreicht werden. So kann beispielsweise bereits nach kurzer Zeit eine weitere Schicht Spachtelmasse aufgebracht werden, falls erforderlich, oder überflüssige Spachtelmasse entfernt werden.

Die Spachtelmasse ist insbesondere für die Ausbesserung und Verfüllung von Fehlstellen in Holzbrettern geeignet. Im Gegensatz zu herkömmlichen Spachtelmassen, die meist farblos sind, enthält die erfindungsgemäße Spachtelmasse in einer bevorzugten Ausführungsform färbende Substanzen, wie Pigmente und organische Farbstoffe, vorzugsweise in einer Menge von 0,5 bis 7 Gew.-%, besonders bevorzugt 1 bis 5 Gew.-%, jeweils bezogen auf das Gesamtgewicht der Spachtelmasse. Auf diese Weise kann die Spachtelmasse an den jeweiligen Farbton des Holzes angepasst und ein optimales ästhetisches Ergebnis erzielt werden. Hierbei hat sich überraschend gezeigt, dass die erfindungsgemäße 1K-UV-Spachtelmasse in vielen Farbtönen eingefärbt werden kann. Die üblicherweise durch die Einfärbung bedingte Beeinträchtigung der UV-Aushärtung konnte im Fall der erfindungsgemäßen 1K-UV-Spachtelmasse nicht beobachtet werden.

In einer bevorzugten Ausführungsform umfasst die erfindungsgemäße Spachtelmasse weiterhin 30 bis 60 Gew.-%, vorzugsweise 40 bis 55 Gew.-%, jeweils bezogen auf das Gesamtgewicht der Spachtelmasse, an Füllstoffen. Bei den Füllstoffen handelt es sich vorzugsweise um organische und/oder anorganische Füllstoffe, besonders bevorzugt um solche, die ausgewählt sind aus der Gruppe bestehend aus Carbonaten, Silikaten und polymeren Füllstoffen.

Die erfindungsgemäße Spachtelmasse ist UV-härtbar. Auf diese Weise kann eine schnelle oberflächliche Aushärtung der Spachtelmasse erreicht werden, so dass die behandelten Bretter direkt nach der Behandlung gestapelt werden können. Ein weiterer Gegenstand der vorliegenden Erfindung ist ein Verfahren zum Verfüllen von Fehlstellen in Holzbrettern. Bei diesen Fehlstellen kann es sich beispielsweise um Risse oder Astlöcher handeln.

Das erfindungsgemäße Verfahren umfasst die folgenden Schritte:
i) Aufbringen einer Spachtelmasse gemäß der vorliegenden Erfindung auf die Fehlstelle;
ii) Bestrahlen der behandelten Stelle mit UV-Licht; und
iii) anschließend Trocknen der Spachtelmasse.

Es hat sich überraschend gezeigt, dass die erfindungsgemäße 1K-UV-Spachtelmasse nicht nur manuell, sondern auch vollautomatisiert aufgebracht werden kann, was bisher mit herkömmlichen Produkten nicht möglich war. Daher ist eine Ausführungsform des erfindungsgemäßen Verfahrens bevorzugt, in der das Ausbringen der Spachtelmassen automatisiert erfolgt.

Durch das Bestrahlen der behandelten Fehlstelle wird eine oberflächliche Aushärtung der Spachtelmasse erreicht, was eine schnelle Weiterverarbeitung erlaubt.

Das Trocknen der Spachtelmasse kann auf dem Fachmann bekannte Weise erfolgen. Vorzugsweise erfolgt das Trocknen bei Raumtemperatur. Alternativ kann das Trocknen auch während des weiteren Verarbeitungsprozesses bei Prozesstemperatur erfolgen.

Zum weiteren Schutz kann die behandelte Fehlstelle versiegelt werden. Hier zeigt sich ein weiterer Vorteil der erfindungsgemäßen Spachtelmasse, die sich durch eine gute Benetzbarkeit mit Lacken, Beizen und Ölen auszeichnet. Daher ist eine Ausführungsform bevorzugt, in der das Verfahren einen weiteren Schritt des Versiegelns der behandelten Fehlstelle umfasst. Für die Versiegelung können herkömmliche Produkte verwendet werden.

Im Gegensatz zu herkömmlichen Verfahren, bei denen die Fehlstellen lediglich oberflächlich versiegelt werden, sieht das erfindungsgemäße Verfahren ein Verfüllen der Fehlstelle vor. Dabei kann die erfindungsgemäße Spachtelmasse auch zum Verfüllen von tieferen Fehlstellen eingesetzt werden. Entsprechend ist eine Ausführungsform bevorzugt, in der die Spachtelmasse in einer Dicke von 1 bis 8 mm aufgebracht wird. Hierbei hat sich weiterhin überraschend gezeigt, dass die erfindungsgemäße 1K-UV-Spachtelmasse sehr gute Haftungseigenschaften zu gängigen Holzarten und Holzwerkstoffen aufweist.

Ein weiterer Gegenstand der vorliegenden Erfindung ist die Verwendung einer erfindungsgemäßen Spachtelmasse zum Verfüllen von Fehlstellen in Holz und/oder Holzbrettern. Bei diesen Fehlstellen kann es sich beispielsweise um Risse, Astlöcher oder Beschädigungen im Holz handeln. In einer bevorzugten Ausführungsform handelt es sich bei dem Holzbrett um ein Fußbodenpaneel, insbesondere um Parkett.

Die vorliegende Erfindung wird anhand der folgenden Figuren verdeutlicht, die jedoch nicht als Einschränkung des Erfindungsgedanken zu verstehen sind.

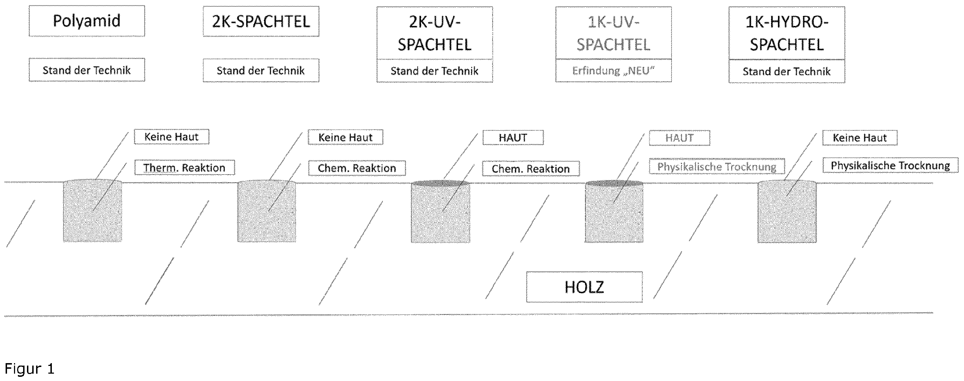

Figur 1 zeigt einen Vergleich der erfindungsgemäßen Spachtelmasse zu üblichen Produkten, die zur Ausbesserung von Fehlstellen in Holzpaneelen zur Verfügung stehen und illustriert ihre Wirkungsweise. Wie aus der Übersicht klar ersichtlich, verbindet die erfindungsgemäße 1K-UV-Spachtelmasse erstmals die Ausbildung einer initialen "Haut" mit dem Vorteil der physikalischen Trocknung.

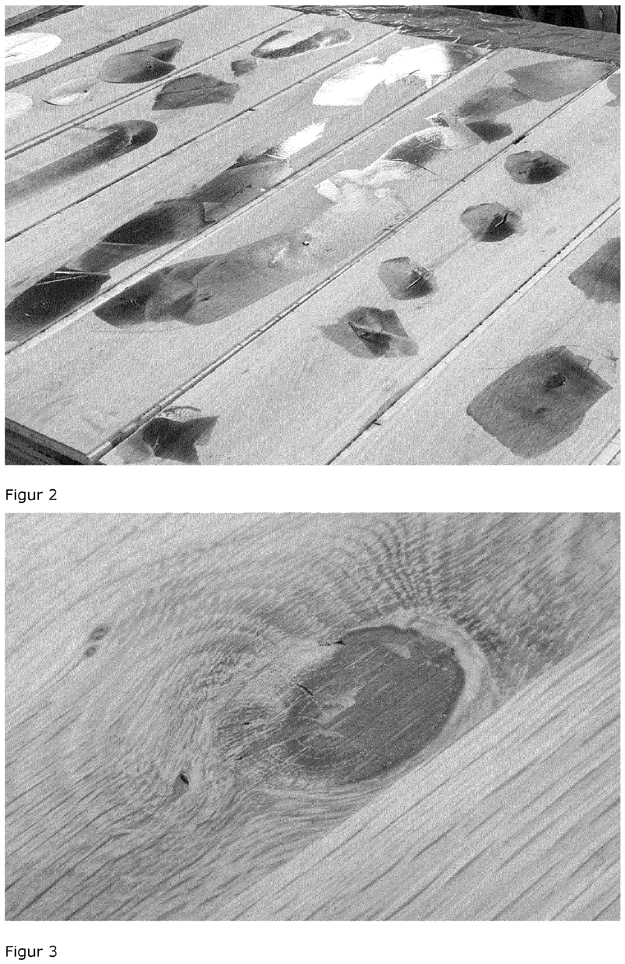

Figur 2 zeigt eine Reihe von Holzpaneelen, die gemäß den gängigen Verfahren ausgebesserte und UV-behandelte Fehlstellen aufweisen, die zur Trocknung ausliegen.
Figur 3 zeigt ein mit der erfindungsgemäßen Spachtelmasse verfülltes Astloch in einem Holzpaneel.

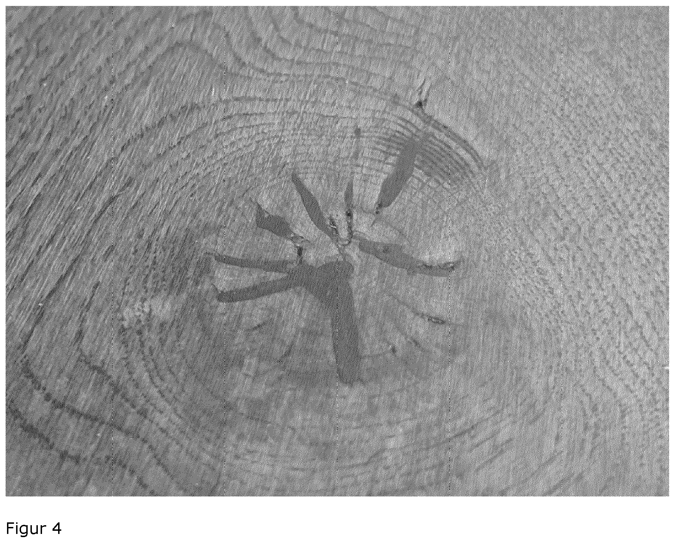

Figur 4 zeigt die Abbildung einer mit der erfindungsgemäßen 1K-UV-Spachtelmasse behandelten Fehlstelle in einem gängigen Holzpaneel nach Beizen und Lackierung. Wie aus der Abbildung ersichtlich, fügt sich die verfüllte Fehlstelle optisch übergangslos in die Oberfläche des Paneels ein.

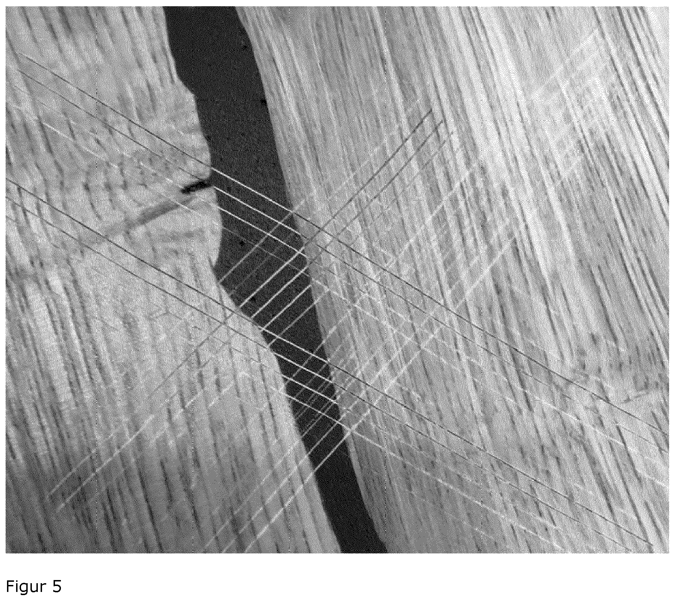

Die erfindungsgemäße 1K-UV-Spachtelmasse zeigt sehr gute Benetzungseigenschaften, so dass insbesondere Beizen gut eindringen und eine homogene Farbgebung erzielt werden kann. Die Benetzung ähnelt dabei der Benetzung des geschliffenen Holzes. Die Haftung auf der 1K-UV-Spachtelmasse wurde mit allen gängigen Lacken und Ölsystemen mittels Gitterschnitt gemäß DIN EN ISO 2409 getestet und positiv bewertet. (Figur 5)

## Patentansprüche

1. 1K-UV-Spachtelmasse zum Verfüllen von Fehlstellen in Holzbrettern umfassend, jeweils bezogen auf das Gesamtgewicht der Spachtelmasse:
a) 20 bis 50 Gew.-% eines UV-härtbaren Bindemittels;
b) 5 bis 30 Gew.-% Fasern; und
c) 0,1 bis 5 Gew.-% eines Photoinitiators.

2. Spachtelmasse gemäß Anspruch 1, **dadurch gekennzeichnet, dass** die Spachtelmasse in Form einer wässrigen Dispersion vorliegt.

3. Spachtelmasse gemäß wenigstens einem der vorangehenden Ansprüche, **dadurch gekennzeichnet, dass** es sich bei dem Bindemittel um ein Bindemittelgemisch mit einem UV-härtbaren Bestandteil und einem physikalisch trocknenden Bestandteil handelt.

4. Spachtelmasse gemäß wenigstens einem der vorangehenden Ansprüche, **dadurch gekennzeichnet, dass** das Bindemittel ausgewählt ist aus der Gruppe der (Meth)Acrylat- und Polyurethan-Bindemittel sowie Mischungen hiervon.

5. Spachtelmasse gemäß wenigstens einem der vorangehenden Ansprüche, **dadurch gekennzeichnet, dass** die Fasern ausgewählt sind aus der Gruppe bestehend aus Kohlenstofffasern, Silikatfasern, Polymerfasern, Cellulosefasern, Keramikfasern und Aramidfasern.

6. Spachtelmasse gemäß wenigstens einem der vorangehenden Ansprüche, **dadurch gekennzeichnet, dass** die Spachtelmasse weiterhin 0,5 bis 7 Gew.-%, vorzugsweise 1 bis 5 Gew.-% färbende Substanzen umfasst, jeweils bezogen auf das Gesamtgewicht der Spachtelmasse.

7. Spachtelmasse gemäß wenigstens einem der vorangehenden Ansprüche, **dadurch gekennzeichnet, dass** die Spachtelmasse weiterhin 30 bis 60 Gew.-%, vorzugsweise 40 bis 55 Gew.-% Füllstoffe umfasst, vorzugsweise solche ausgewählt aus der Gruppe bestehend aus Carbonaten, Silikaten und polymeren Füllstoffen.

8. Verfahren zum Verfüllen von Fehlstellen in Holzbrettern umfassend die Schritte:
i) Aufbringen einer Spachtelmasse gemäß wenigstens einem der Ansprüche 1 bis 8 auf die Fehlstelle;
ii) Bestrahlen der behandelten Stelle mit UV-Licht; und
iii) anschließend Trocknen der Spachtelmasse.

9. Verfahren gemäß Anspruch 8, **dadurch gekennzeichnet, dass** das Aufbringen der Spachtelmasse vollautomatisiert erfolgt.

10. Verfahren gemäß wenigstens einem der Ansprüche 8 oder 9, **dadurch gekennzeichnet, dass** die verfüllte Fehlstelle weiterhin versiegelt wird.

11. Verfahren gemäß wenigstens einem der Ansprüche 8 bis 10, **dadurch gekennzeichnet, dass** die Spachtelmasse maschinell oder manuell aufgebracht wird.

12. Verfahren gemäß wenigstens einem der Ansprüche 8 bis 11, **dadurch gekennzeichnet, dass** die Spachtelmasse in einer Dicke von 1 bis 8 mm aufgebracht wird.

13. Verwendung einer Spachtelmasse gemäß wenigstens einem der Ansprüche 1 bis 7 zum Verfüllen von Fehlstellen in Holz und/oder Holzbrettern.

14. Verwendung gemäß Anspruch 13, **dadurch gekennzeichnet, dass** es sich bei den Holzbrettern um Fußbodenpaneele handelt.
